# EUROPÄISCHE PATENTSCHRIFT

(11) **EP 0 812 941 B1**
(45) Veröffentlichungstag und Bekanntmachung des Hinweises auf die Patenterteilung: **02.11.2000**
(21) Anmeldenummer: 97109580.7
(22) Anmeldetag: 12.06.1997
(51) Int. Cl.: D04H 1/00, A47L 13/16, A47K 7/02, C08L 1/12

(54) **Schwamm und Verfahren zu dessen Herstellung**
Sponge and process for making the same
Eponge et son procédé de fabrication

(30) Priorität: 14.06.1996 DE 19623703
(43) Veröffentlichungstag der Anmeldung: 17.12.1997
(73) Patentinhaber: Firma Carl Freudenberg, 69469 Weinheim (DE)
(72) Erfinder: Link, Eberhard, Dr., 72175 Dornhan (DE); Hausdorf, Jörg, 64658 Fürth/Odenwald (DE); Hermanutz, Frank, Dr., 71229 Leonberg (DE)

(56) Entgegenhaltungen:
- EP-A- 0 705 868
- GB-A- 2 284 421
- US-A- 5 047 180
- DATABASE WPI Section Ch, Week 7848 Derwent Publications Ltd., London, GB; Class A11, AN 78-87085A XP002046827 & JP 53 123 459 A (NOGUCHI KENKYUSHO KK) , 27.Oktober 1978

## Beschreibung

Die Erfindung befaßt sich mit einem Schwamm aus Cellulose und einem Verfahren zu dessen Herstellung.

In der Druckschrift Ullmann's Encyklopädie der technischen Chemie, 3. Aufl. (1967), Bd. 18, S. 175-177, wird ein Herstellungsverfahren für schwammartige Cellulosegebilde beschrieben, bei welchem aus Holz gewonnene Zellstofflagen in einer 15 - 20%-igen NaOH-Lösung, welche im Überschuß vorliegt, gequollen werden. Dabei entsteht nach einiger Zeit Natroncellulose. Die Natronlauge wird danach abgepreßt; sie enthält in gelöster Form Hemicellulosen, welche die nachfolgenden Verfahrensschritte ansonsten störend beeinflussen würden. Der verbleibende Preßkuchen wird in zerkleinerter Form mit Schwefelkohlenstoff behandelt, wobei Cellulosexanthogenat entsteht. Dieses löst sich glatt in NaOH-Lösung, worin es sich nach einiger Zeit unter Senkung des Durchschnittspolymersisationsgrades (DP) abbaut. Je nach eingesetzter Zellstoffqualität und Lagerzeit erfolgt dabei eine Verringerung des DP von 800 bis 1200 auf 200 bis 600.

Der DP ist als die mittlere Anzahl an Cellulose-Einzelmolekülen definiert, aus denen eine Cellulosepolymerkette im Mittel aufgebaut ist.

Die alkalische Xanthogenatlösung wird anschließend mit porenbildendem Glaubersalz, Baumwollfasern und gegebenenfalls Farbpigment gemischt und die Mischung bis zur gleichmäßigen Verteilung aller Komponenten gerührt oder geknetet. Es folgen das Füllen einer dem Schwamm entsprechenden Form, welche geschlossene Wandungen aufweist, mit der Mischung und dann das Verschließen der Form, wobei der Verschluß das Abfließen der flüssigen Phase in der Mischung jedoch noch zuläßt.

Die in der Form befindliche Masse wird in einem Koagulationsbad von 100°C einige Stunden lang gekocht. Dabei wird das Xanthogenat aufgespalten, das porenbildende Salz herausgelöst, und es entsteht in der Form ein schwammartiges Gebilde. Dieses wird in Wasser gewaschen und dabei mit einer geringen Menge 1 %-iger Schwefelsäurelösung in Verbindung gebracht, um den verbleibenden Restgehalt an organischen Schwefelkohlenstoff- und Schwefelwasserstoffverbindungen zu vermindern.

Die Erfindung hat zur Aufgabe, einen Schwamm und ein Verfahren zu dessen Herstellung anzugeben, wobei die zuletzt genannten Schwefelverbindungen, insbesondere Schwefelkohlenstoff und Schwefelwasserstoff, im Schwamm gänzlich fehlen. Eine weitere Aufgabe ist es, die Abnahme des Durchschnittspolymerisationsgrades DP der Cellulose während der Herstellung des Schwammes zu vermeiden, um höhere Festigkeitswerte zu erzielen und die Lagerfähigkeit der Celllosederivate zu steigern.

Die Anmelderin hat gefunden, daß die Aufgabe gelöst werden kann, wenn bei der Herstellung von dekristallisierter, niedersubstituierter (DS von 0,2 bis 1,5), acetylierter Cellulose ausgegangen wird, die in Lösungsmitteln oder Lösungsmittelsystemen auf Basis Dimethylsulfoxid oder Dimethylacetamid löslich ist. Aus letzterem Grund muß eine Derivatisierung mit Schwefelkohlenstoff zur Auflösung der Cellulose nicht mehr durchgeführt werden.

Die Erfindung ist im ersten Verfahrensanspruch aufgezeigt und wird im folgenden näher erläutert. Vorteilhafte Ausgestaltungen des Verfahrens werden in den Unteransprüchen offenbart. Der Schwamm selbst trägt die Kennzeichen des Produktanspruchs.

Meist aus Holz gewonnener Zellstoff, welcher als Schichtmaterial im Handel erhältlich ist, wird in einem Rührgefäß mit 15 bis 35 Vol.-%iger wäßriger Alkalilauge, vorzugsweise einer NaOH-Lösung, übergossen und etwa 1 Stunde ruhen gelassen. Die Alkalilauge wird zweckmäßig im mindestens vierfachen Überschuß, bezogen auf das Trockengewicht des eingesetzten Zellstoffs, angewendet.

Der Zeitwert 1 Stunde kann unterschritten werden, wenn durch vorherige Testversuche gewährleistet ist, daß das Quellen des Zellstoffs vollständig erfolgt.

Danach wird die Alkalilauge in einem solchen Umfang durch Abpressen entfernt, daß der verbleibende Preßkuchen das Dreifache des Trockengewichts des eingesetzten Zellstoffs aufweist. Dieser Preßkuchen wird mittels einer konvetionellen Schlag- oder Shreddermühle auf Partikelgrößen unter 3 mm Durchmesser zerkleinert und dabei aufgelockert.

Die Partikel werden anschließend in einen Rührbehälter gegeben und dort mit der fünffachen Menge eines flüssigen, auf Natroncellulose, also das Partikelmaterial, acetylierend wirkenden Agens übergossen und die Masse etwa 60 min lang gerührt.

Bespiele für verwendbare Agenzien sind Essigsäureanhydrid, Eisessig (wasserfreie Essigsäure) oder Acetylchlorid.

Dabei werden freie OH-Gruppen der Cellulose durch Acetylgruppen bis zu einem Durchschnitts-Substituierungsgrad (DS) von 0,2 bis 1,5 hinab verestert .

Der Durchschnitts-Substituierungsgrad DS gibt die Anzahl der OH-Gruppen an, welche im Mittel von den im Mittel 3 freie Hydroxylgruppen des Cellulose-Einzelmoleküls in dessen Polymerkette substituiert sind. Hieraus ergibt sich für den DS ein Maximalwert von 3 und ein Minimalwert von 0.

Danach wird das überschüssige Substituierungsmittel, also die flüssige Phase, aus der Feststoffmasse unter gleichzeitigem Absaugen ausgepreßt. Der Rückstand, die nun in substituierter Form vorliegende Cellulosederivat-Masse, wird mit Wasser mindestens dreimal gewaschen und anschließend bei einer Umgebungstemperatur von 100°C zu einem weißen Pulver getrocknet.

Das Cellulosederivat-Pulver wird dann bei 20°C bis 50°C zu einem Anteil von 4 bis 12 Gew.-% in einem auf Dimethylsulfoxid oder Dimethylacetamid basierenden Lösungsmittel oder Lösungsmittelsystem gelöst.

Als bevorzugte Lösungsmittel(-systeme) erwiesen sich Dimethylsulfoxid (DMSO), DMSO/Lithiumchlorid (Chloridgehalt 5 Gew.-%), DMSO/Magnesiumchlorid (Chloridgehalt 3 Gew.-%), DMSO/N-Methyl-morpholin-N-oxid oder Dimethylacetamid/Lithiumchlorid. Dabei dienen die anorganischen Chloride als Lösungsvermittler. Insbesondere die Dimethylsulfoxid-Systeme weisen eine gute Lösekraft auf, sind im Hinblick auf den Arbeitsschutz problemlos zu handhaben und lassen sich aus Laborabfällen leicht regenerieren.

Anschließend werden zu dieser Lösung, welche als 100 Gew.-% definiert wird, 100 bis 500 Gew.-% wasserfreies Salz zugegegeben, welches als Porenbildner dient. Solche Salze sind an sich bekannt; sie lösen sich in Wasser und schwachen Säuren und treten in keine chemische Wechselwirkung mit dem Cellulosederivat.

Weiterhin wird die Lösung versetzt mit 0,5 bis 4 Gew.-% im verwendeten Lösungsmittel unlöslichen Fasern natürlichen oder synthetischen Ursprungs und ggf. mit bis zu 5 Gew.-% üblicher Farbstoffe, zweckmäßig Pigmentfarbstoffe.

Die Bezeichnung "wasserfrei" für die Porenbildnersalze ist so zu verstehen, daß in ihnen bei Raumtemperatur kein oder lediglich gebundenes Kristallwasser enthalten ist. Als Beispiel sei das besonders preiswert erhältliche NaCl genannt.

Die entstandene Mischung wird bei Raumtemperatur gerührt oder geknetet, bis sich eine homogene Verteilung aller Komponenten zeigt, was dadurch zu beobachten ist, daß bei Zugabe von Farbstoff sich dieser gleichmäßig in der Mischung verteilt hat. Dieser Vorgang ist üblicherweise nach 10 bis 30 min abgeschlossen.

Die Mischung wird sodann in den Hohlraum einer offenen Form mit porösen, für Wasser durchlässigen Wandungen überführt. Hierbei kann Druck angewendet werden, wenn das Volumengewicht des Schwammes erhöht werden soll. Die Form wird anschließend in kochendes Wasser getaucht und verbleibt darin, bis sich ein zusammenhängender Schaumkörper gebildet hat. Die hierzu erforderliche Zeitspanne ist mühelos durch Vorversuche ermittelbar, wobei auch das vollständige Auflösen des Porenbildnersalzes zu berücksichtigen ist.

Die Form wird dem Wasserbad entnommen und der fertige Schwamm im Wasser gewaschen, bis keine Rückstände des Lösungsmittelsystems und freier Farbstoffe mehr nachweisbar sind.

Eine Verfahrensvariante besteht darin, das schwammartige Gebilde nach der Behandlung mit kochendem Wasser, während der oder anschließend an die folgende Wäsche, in einem offenen Gefäß in 0,1 bis 2 normaler, wäßriger Natronlauge unter Rühren bei 50°C 2 Stunden lang zu behandeln. Hierdurch werden die im Schwamm vorhandenen Acetylgruppen durch Rückspaltung einer Esterverseifung unterworfen. Der Vorgang kann auch bei Raumtemperatur erfolgen, jedoch wird die Reaktion bei 50°C wesentlich beschleunigt und dadurch ökonomischer. Die Reaktion kann in einer offenen Vorrichtung durchgeführt werden. Die Porenstruktur des Schwammes wird dabei nicht verändert, jedoch erhält er durch diese Maßnahme die wertvolle Eigenschaft, daß die Benetzung mit Wasser äußerst spontan erfolgt.

Als besonders geeignetes Acetylierungsmittel hat sich wegen seiner preiswerten Verfügbarkeit Essigsäureanhydrid erwiesen.

Der erfindungsgemäße Schwamm enthält keinerlei organische oder anorganische Schwefelverbindungen, da Schwefelatome nur gegebenenfalls im verwendeten Lösungsmittel vorhanden sind und dort chemisch wirkungslos bleiben.

Da bei der Herstellung keine Verringerung des Durchschnittspolymersisationsgrades (DP) am eingesetzten Zellstoff stattfindet, können Rohstoffe mit hohen DP-Werten von bis zu 1200 eingesetzt werden, wodurch Schwämme herstellbar sind, welche den bei der Verarbeitung auftretenden mechanischen Kräften ohne Festigkeitsverluste widerstehen.

Bereits durch die Auswahl der Rohstoffe mit ihren DP-Werten können die diesen entsprechenden Eigenschaften der Endprodukte vorausbestimmt werden, ohne den schwer kontrollierbaren Schritt des DP-Abbaus berücksichtigen zu müssen.

Außer dem Auskochen mit Wasser am Ende des erfindungsgemäßen Verfahrens können alle Behandlungsschritte bei Raumtemperatur durchgeführt werden.

Bei der Herstellung selbst entstehen keine giftigen Dämpfe oder Abwässer.

Die Cellulosederivate sind in den genannten organischen Lösungsmitteln ohne Veränderung ihres DP-Wertes auch mehrere Monate lang lagerfähig.

Die Erfindung wird anhand des nachfolgenden Beispiels näher erläutert. Im Handel erhältliche Zellstoffplatten mit einem DP von 600 werden zu kleinen Stücken geshreddert. Hiervon werden 500 g in ein 51-Becherglas gegeben und mit überschüssiger, 22%-iger NaOH-Lösung übergossen. Nach 30 min wird die Natronlauge über eine Glasfritte abgesaugt und der verbleibende Zellstoff mit einer Presse bei 50 bar abgepreßt.

Der abgepreßte Zellstoff wird zerkleinert, in einer Apparatur mit Rührer und Kühlmöglichkeit mit Essigsäureanhydrid im Überschuß übergossen und eine halbe Stunde gerührt. Die feste Masse wird abfiltriert und mit Wasser so lange gewaschen, bis der pH-Wert des Waschwassers neutral ist. Danach wird der Preßkuchen gelockert, auf eine Schale gelegt und bis zur Gewichtskonstanz bei 100°C getrocknet.

Hiervon wird der DS bestimmt, indem das Cell-acetat mit NaOH verseift, der Überschuß an NaOH mit HCL zurücktitriert und aus dem Verbrauch an NaOH der DS errechnet wird. Es ergibt sich ein DS von 0,6.

70 g des getrockneten Cell-acetats wird vorgelegt und mit 1167 g DMSO überschüttet, gerührt und dabei gelöst. Nach 30 min werden noch 10 g MgCl₂ zugegeben, die sich ebenfalls lösen und der Lösung eine klarere Farbe geben.

Diese Lösung wird in einen Kneter überführt. Dann werden ihr 23 g Baumwoll-Fasern und 3 kg Kochsalz zugegeben. Eine Stunde lang erfolgt das Kneten.

Die homogene Masse wird in eine oben offene, an den Wandungen fein gelochte Form gepreßt, diese verschlossen und in einem Wasserbad für 2 Stunden gekocht.

Der fertige Schwamm wird der Form entnommen und mit Wasser nachgewaschen. Danach wird der Schwamm in eine 1-normale NaOH-Lösung gelegt und bei 50°C für 2 Stunden gerührt, um die Acetatgruppen wieder zu verseifen. Man erhält einen dem Formhohlraum entsprechenden Schwamm mit einem Raumgewicht von 37 kg/m³.

Der abermals bestimmte DP ergibt nach DIN 54 270 (Lösen der Cellulose in Eisen-Weinsäurelösung und Bestimmung der spezifischen Viskosität mit und ohne Cellulose) keine über der Toleranz des Meßverfahrens liegende Abnahme des DP gegenüber dem Anfangszustand.

Zur Prüfung auf die sonst üblichen Begleitstoffe Schwefelkohlenstoff und Schwefelwasserstoff wurden 5 g Schwamm mit 200 ml Wasser und 10 ml konzentrierter Phosphorsäure übergossen, 3 h gekocht und mit Schutzgas gasförmige Substanzen ausgetrieben. Schwefelwasserstoff wird mit Zinksulfat gefällt, Schwefelkohlenstoff an Aktivkohle adsorbiert. Die Auswertung ergab keine Werte, weder für CS₂ noch für H₂S.

## Patentansprüche

1. Verfahren zur Herstellung eines Cellulose-Schwammes mit den Schritten:
- Quellen von Zellstoff in einem Rührgefäß durch Übergießen mit 15 bis 35%-iger Alkalilauge im mindestens vierfachen Überschuß, bezogen auf das Trockengewicht des eingesetzten Zellstoffs;
- Stehenlassen des übergossenen Zellstoffs für 1 Stunde;
- Abpressen der Alkalilauge, bis der Preßkuchen das Dreifache des Trockengewichtes des eingesetzten Zellstoffs aufweist;
- Zerkleinern des Preßkuchens durch Mahlen auf Partikelgrößen kleiner als 3 mm Durchmesser;
- Übergießen des zerkleinerten Preßkuchens in einem Rührbehälter mit der fünffachen Menge eines flüssigen, auf Natroncellulose acetylierend wirkenden Agens;
- Rühren des Reaktionsgemisches für 60 min;
- Auspressen der flüssigen Phase aus der Feststoffmasse unter gleichzeitigem Absaugen;
- Waschen der entstandenen Cellulosederivatmasse mit Wasser
- Trocknen der Cellulosederivatmasse bei 100°C zu einem Pulver;
- Lösen des Cellulosederivatpulvers bei 20°C bis 50°C zu 4 bis 12 Gew.-% in einem auf Dimethylsulfoxid oder Dimethylacetamid basierenden Lösungsmittelsystem;
- Zugeben zur Lösung, welche als 100 Gew.-% definiert wird, von
a) 100 bis 500 Gew.-% eines bei Raumtemperatur wasserfreien Salzes, welches in Wasser löslich und bezüglich des Cellulosederivats inert ist, als Porenbildner,
b) 0,5 bis 4 Gew.-% im Lösungsmittel unlöslicher Fasern und
c) bis zu 5 Gew.-% Farbstoffe;
- Rühren oder Kneten der Mischung bei Raumtemperatur für 10 bis 30 min bis zur homogenen Verteilung aller Komponenten;
- Einbringen der Mischung, bei gewünschtem höherem Volumengewicht des Schwammes unter Druck, in den der späteren Schwammform entsprechenden Hohlraum einer offenen, mit perforierten Wandungen versehenen Form;
- Eintauchen der Form mit Inhalt in kochendes Wasser, bis sich ein zusammenhängender Schwammkörper ausgebildet hat;
- Entnehmen der Form aus dem Wasserbad und Entfernen des Schwamms;
- Waschen des Produktes mit Wasser.

2. Verfahren nach Anspruch 1, dadurch gekennzeichnet, daß man den Schwamm nach der Behandlung mit kochendem Wasser, während der oder anschließend an die folgende Wäsche, in einem offenen Gefäß in 0,1 bis 2n wäßriger Natronlauge unter Rühren bei 50°C 2 Stunden lang behandelt.

3. Verfahren nach Anspruch 1 bis 2, gekennzeichnet durch die Verwendung von Essigsäureanhydrid als Acetylierungsmittel.

4. Verfahren nach einem der Ansprüche 1 bis 3, gekennzeichnet durch die Verwendung eines der Lösungsmittelsysteme Dimethylsulfoxid, Dimethylsulfoxid/Lithiumchlorid, Dimethylsulfoxid/N-Methyl-morpholin-N-oxid oder Dimethylacetamid/Lithiumchlorid.

5. Schwamm, hergestellt nach dem Verfahren der Ansprüche 1 bis 4, zumindest bestehend aus modifizierter Cellulose und natürlichen und/oder synthetischen Fasern, wobei die Cellulose in dekristallisierter Form vorliegt, wobei die Hydroxyl-Gruppen der Cellulose mit AcetylGruppen substituiert sind, wobei der Durchschnitts-Substituierungsgrad (DS) 0,2 bis 1,5 beträgt und wobei keinerlei organischen oder anorganischen Schwefelverbindungen im Schwamm vorhanden sind.

## Claims

1. A process for producing a cellulose sponge comprising the steps of:
- swelling pulp material in a stirred vessel by overpouring with from 15 to 35% strength alkali metal lye in an at least fourfold excess, based on the dry weight of the pulp material used;
- leaving the overpoured pulp material to stand for 1 hour;
- pressing off the alkali metal lye until the press cake has three times the dry weight of the pulp material used;
- comminuting the press cake by grinding to particle sizes less than 3 mm in diameter;
- overpouring the comminuted press cake in a stirred vessel with five times the amount of a liquid acetylating agent for sodium cellulose;
- stirring the reaction mixture for 60 min;
- pressing the liquid phase out of the solid material while aspirating at the same time;
- washing the resulting cellulose derivative material with water
- drying the cellulose derivative material at 100°C to form a powder;
- dissolving the cellulose derivative powder at from 20°C to 50°C in a solvent system based on dimethyl sulphoxide or dimethylacetamide to form a solution from 4 to 12% by weight in strength;
- adding to the solution, which is defined as 100% by weight,
a) from 100 to 500% by weight of a water-soluble salt which is anhydrous at room temperature and is inert with regard to the cellulose derivative, as pore-former,
b) from 0.5 to 4% by weight of fibres which are insoluble in the solvent and
c) up to 5% by weight of dyes;
- stirring or kneading the mixture at room temperature for from 10 to 30 min until all components are homogeneously dispersed;
- introducing the mixture, under pressure if it is desired for the sponge to have a relatively high volume weight, into the cavity, which corresponds to the later shape of the sponge, of an open mould provided with perforated walls;
- immersing the mould plus contents in boiling water until a cohesive sponge body has formed;
- removing the mould from the water bath and removing the sponge;
- washing the product with water.

2. A process according to claim 1, characterized in that the sponge is treated in an open vessel in from 0.1 to 2 N aqueous sodium hydroxide solution at 50°C for 2 hours with stirring following the treatment with boiling water and during or after the subsequent washes.

3. A process according to claim 1 to 2, characterized by the use of acetic anhydride as acetylating agent.

4. A process according to any one of claims 1 to 3, characterized by the use of one of the solvent systems dimethyl sulphoxide, dimethyl sulphoxide/lithium chloride, dimethyl sulphoxide/N-methylmorpholine N-oxide or dimethylacetamide/lithium chloride.

5. A sponge produced according to the process of claims 1 to 4, consisting at least of modified cellulose and natural and/or synthetic fibres, the cellulose being present in decrystallized form, the hydroxyl groups of the cellulose being substituted by acetyl groups, the average degree of substitution (DS) being from 0.2 to 1.5 and no organic or inorganic sulphur compounds whatsoever being present in the sponge.

## Revendications

1. Procédé pour la fabrication d'une éponge en cellulose, comprenant les étapes consistant à:
- gonfler de la pâte de cellulose dans un récipient d'agitation en arrosant avec de la lessive alcaline possédant une concentration de 15 à 35%, en un excès au moins multiplié par quatre, rapporté au poids à l'état sec de la pâte de cellulose mise en oeuvre;
- laisser reposer la pâte de cellulose après l'arrosage pendant 1 heure;
- extraire par pression la lessive alcaline jusqu'à ce que le gâteau obtenu par compression présente le triple du poids à sec de la pâte de cellulose mise en oeuvre;
- désintégrer le gâteau obtenu par compression par broyage pour obtenir des granulométries inférieures à un diamètre de 3 mm;
- arroser le gâteau désintégré obtenu par compression dans un récipient d'agitation avec une quantité multipliée par cinq d'un agent liquide ayant un effet d'acétylation sur la cellulose sodique;
- agiter le mélange réactionnel pendant 60 minutes;
- évacuer par pression la phase liquide de la matière solide tout en filtrant simultanément sous aspiration;
- laver avec de l'eau la matière de dérivé de cellulose obtenue;
- sécher la matière de dérivé de cellulose à une température de 100°C pour obtenir une poudre;
- dissoudre la poudre de dérivé de cellulose à une température de 20°C à 50°C jusqu'à concurrence de 4 à 12% en poids dans un système de solvant à base de diméthylsulfoxyde ou de diméthylacétamide;
- ajouter à la solution qui est définie comme représentant 100% en poids,
a) à concurrence de 100 à 500% en poids, un sel anhydre à la température ambiante qui est soluble dans l'eau et inerte vis-à-vis du dérivé de cellulose, à titre d'agent porogène,
b) à concurrence de 0,5 à 4% en poids, des fibres insolubles dans le solvant, et
c) jusqu'à concurrence de 5% en poids, des colorants;
- agiter ou malaxer le mélange à la température ambiante pendant un laps de temps de 10 à 30 minutes jusqu'à ce que l'on obtienne une distribution homogène de tous les composants;
- introduire le mélange, avec le poids volumique supérieur désiré de l'éponge, sous pression, dans l'espace creux correspondant à la forme d'éponge ultérieure, d'un moule ouvert comprenant des parois perforées;
- plonger le moule avec son contenu dans de l'eau en ébullition jusqu'à ce que l'on obtienne un corps d'éponge cohérent;
- retirer le moule du bain-marie et extraire l'éponge;
- laver le produit avec de l'eau.

2. Procédé selon la revendication 1, caractérisé en ce qu'on traite l'éponge, après le traitement avec de l'eau en ébullition, pendant le lavage ultérieur ou directement après ce dernier, dans un récipient ouvert, sous agitation, dans de la lessive de soude aqueuse de 0,1 à 2n, à une température de 50°C pendant 2 heures.

3. Procédé selon les revendications 1 à 2, caractérisé par l'utilisation d'anhydride acétique à titre d'agent d'acétylation.

4. Procédé selon l'une quelconque des revendications 1 à 3, caractérisé par l'utilisation d'un des systèmes de solvants choisis parmi le groupe comprenant le diméthylsulfoxyde, le diméthylsulfoxyde/chlorure de lithium, le diméthylsulfoxyde/N-oxyde de N-méthylmorpholine ou le diméthylacétamide/chlorure de lithium.

5. Eponge fabriquée conformément au procédé selon les revendications 1 à 4, constituée au moins par de la cellulose modifiée et par des fibres naturelles et/ou synthétiques, dans laquelle la cellulose est présente sous forme décristallisée, dans laquelle les groupes hydroxyle de la cellulose sont substitués avec des groupes acétyle, dans laquelle le degré de substitution moyen (DS) s'élève de 0,2 à 1,5 et dans laquelle aucun composé de soufre organique ou inorganique quel qu'il soit n'est présent dans l'éponge.
